# EUROPEAN PATENT APPLICATION

(11) **EP 2 978 049 A1**
(43) Date of publication of application: **27.01.2016**
(21) Application number: 13878704.9
(22) Date of filing: 22.03.2013
(51) Int. Cl.: H01M 2/20, H01M 2/30

(54) **BATTERY UNIT AND BATTERY MODULE HAVING STACKED BATTERY UNITS**

(71) Applicant: Automotive Energy Supply Corporation, Zama-shi, Kanagawa 252-0012 (JP)
(72) Inventor: YANAGIHARA, Yasuhiro, Zama-shi Kanagawa 252-0012 (JP); IKEZOE, Michinori, Zama-shi Kanagawa 252-0012 (JP); NAKAMURA, Ryouichi, Zama-shi Kanagawa 252-0012 (JP)
(74) Representative: Hoefer & Partner Patentanwälte mbB
(86) International application number: PCT/JP2013/058266
(87) International publication number: WO 2014/147809

(57) **Abstract**

A first cell unit (1A) has one side negative electrode terminal (15) at one side in a stacking direction when connecting the cell units (1) also has the other side positive electrode terminal 16 and the other side negative electrode terminal 17 at the other side in the stacking direction. A second cell unit (1B) has one side positive electrode terminal (24) and one side negative electrode terminal (25) at the one side in the stacking direction also has the other side positive electrode terminal (26) and the other side negative electrode terminal (27) at the other side in the stacking direction.

## Description

The present invention relates to a battery unit and a battery module having stacked battery units.

### Background Art

For instance, Patent Document 1 discloses that a battery pack is formed by accommodating a flat battery sheathed with a laminate film in a case and a multiple battery pack is obtained by stacking a plurality of such battery packs. This battery pack has a flat rectangular parallelepiped, and is provided on an upper surface of a flat rectangular case with a positive electrode terminal and a negative electrode terminal along a longitudinal direction of the upper surface of this case with these positive and negative electrode terminals being separate from each other.

However, the positive and negative electrode terminals of the battery pack in Patent Document 1 are formed in a substantially middle position on the upper surface of the case in a stacking direction. Because of this, when forming the multiple battery pack, in order to connect adj acent battery packs, a member such as a busbar is required, and this brings a problem of increasing the parts count.

### Citation List

### Patent Document

Patent Document 1 : Japanese Unexamined Patent Application Publication No. 2003-303583

### Summary of the Invention

Therefore, in the present invention, a battery unit that is capable of being stacked with and electrically connected to a plurality of battery units, comprises: a plurality of terminals, and wherein at least a pair of terminals among the plurality of terminals are formed with both of the pair of terminals being separate from each other in a stacking direction of the battery unit, and a remaining terminal is formed in a same position as either one of the pair of terminals in the stacking direction.

More specifically, one of the pair of terminals is a positive electrode terminal, and the other of the pair of terminals is a negative electrode terminal, and the battery unit has more than one positive electrode terminal and more than one negative electrode terminal.

Preferably, a terminal located at one side in the stacking direction of the battery unit is either one of a protruding terminal that protrudes from the battery unit laterally outwards along the stacking direction or a non-protruding terminal that is positioned within the battery unit in the stacking direction, and a terminal located at the other side in the stacking direction of the battery unit is the other of the protruding terminal and the non-protruding terminal, and adjacent battery units are connected by fitting of the protruding terminal and the non-protruding terminal.

Far preferably, the non-protruding terminal is located in a position that is a back side of the protruding terminal which is the same position in a direction except the stacking direction.

More specifically, the battery unit is formed by stacking and accommodating a plurality of film-sheathed batteries in a case. The battery unit might have a voltage detection unit that is capable of detecting voltage of the film-sheathed battery from outside of the case.

A lead terminal of the film-sheathed battery or a conductive member to which the lead terminal is connected is formed so as to be exposed to outside at one end surface of the case.

A battery module of the present invention is formed by arbitrarily stacking and combining a plurality of battery units described above.

The battery module could be provided with a heat radiation member that continuously extends throughout the plurality of battery units in the stacking direction of the battery unit and directly or indirectly touches the lead terminal of the film-sheathed battery.

According to the present invention, when stacking the battery units, the terminals between the adjacent battery units can be in contact with each other. Thus, upon coupling the battery units, the battery units can be easily coupled together without using an additional member such as the busbar.

### Brief Description of Drawings

[Fig. 1]

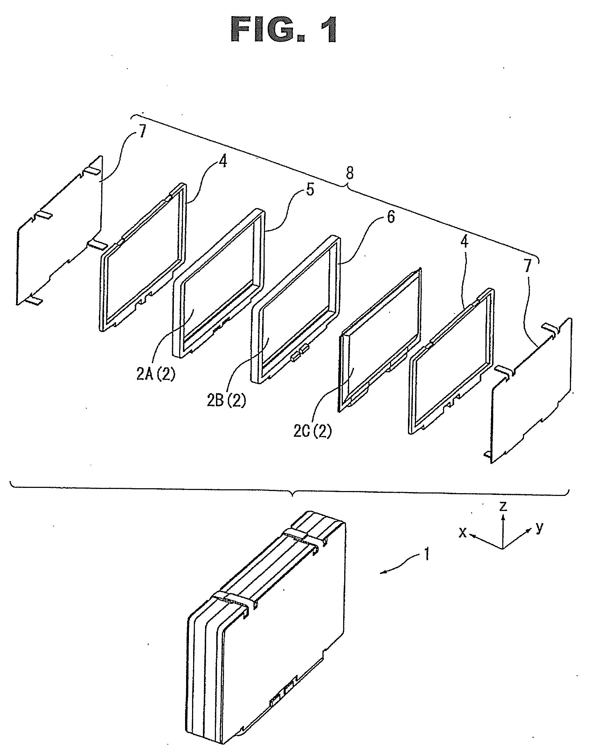

   Fig. 1 is a perspective exploded view schematically showing a cell unit according to the present invention.
[Fig. 2]

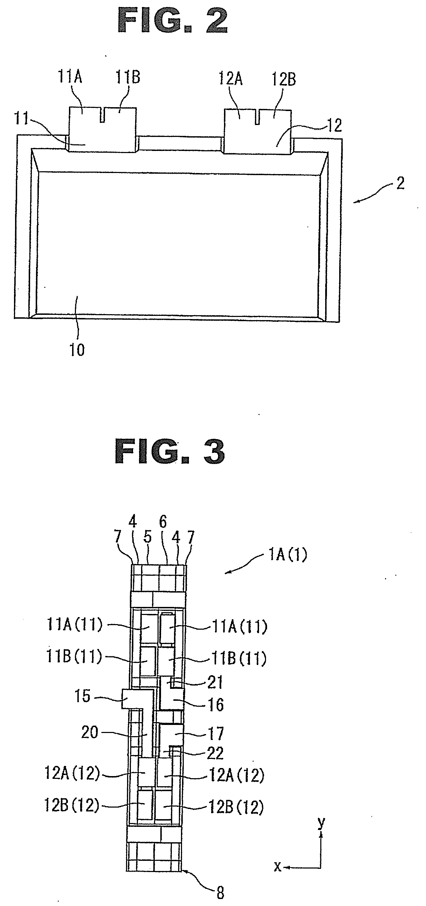

   Fig. 2 is a plan view of a cell.
[Fig. 3]
   Fig. 3 is a bottom view of a first cell unit.
[Fig. 4]

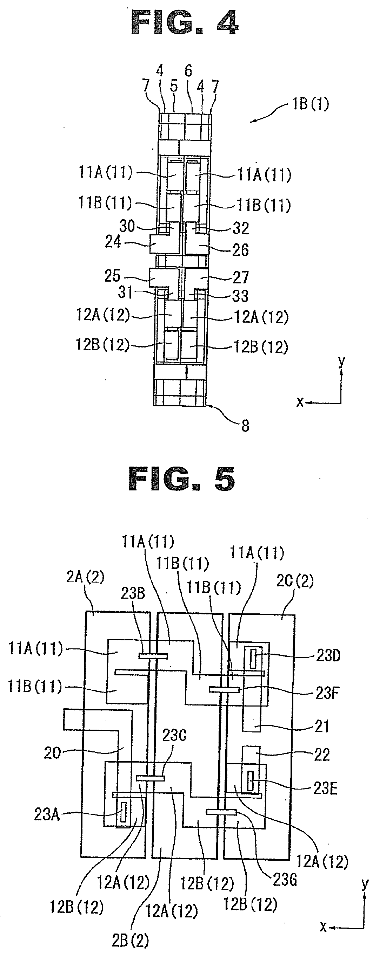

   Fig. 4 is a bottom view of a second cell unit.
[Fig. 5]
   Fig. 5 is an explanatory drawing schematically showing an electrical connection state in the first cell unit.
[Fig. 6]

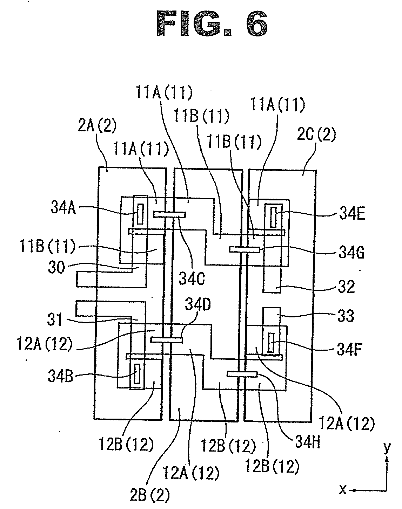

   Fig. 6 is an explanatory drawing schematically showing an electrical connection state in the second cell unit.
[Fig. 7]

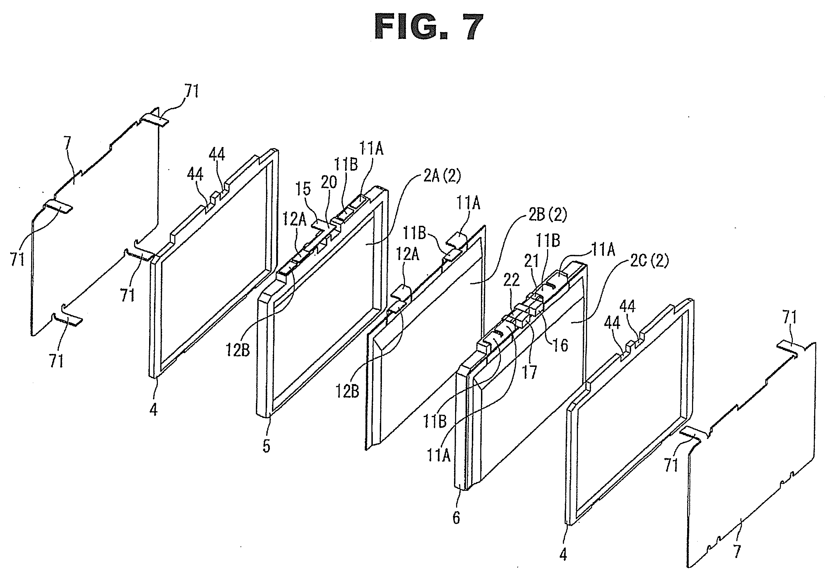

   Fig. 7 is a perspective exploded view schematically showing the first cell unit.
[Fig. 8]

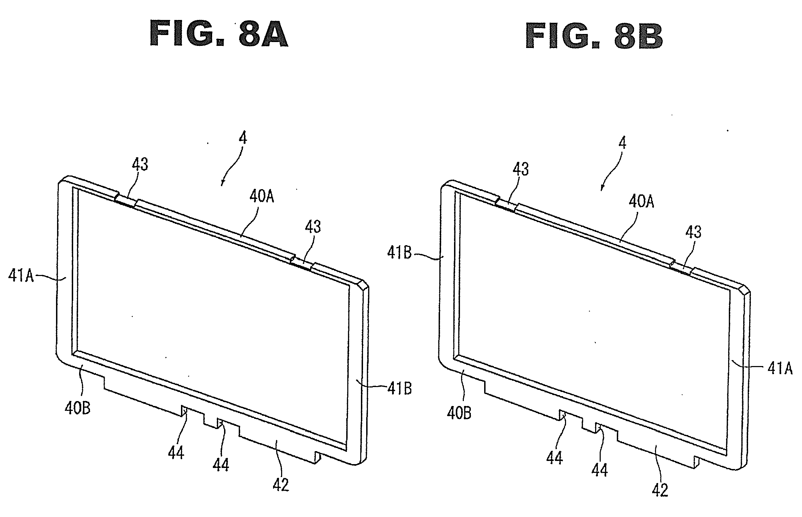

   Figs. 8A and 8B are explanatory drawings schematically showing a first spacer. Fig. 8A is a perspective view viewed from a front surf ace side. Fig. 8B is a perspective view viewed from a back surface side.
[Fig. 9]

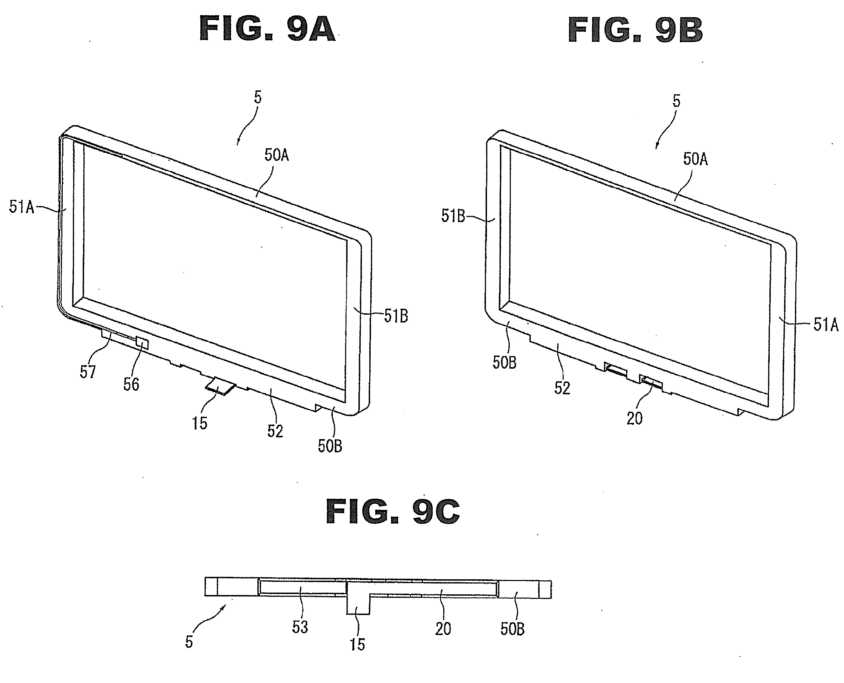

   Figs. 9A, 9B and 9C are explanatory drawings schematically showing a second spacer. Fig. 9A is a perspective view viewed from a front surface side. Fig. 9B is a perspective view viewed from a back surface side. Fig. 9C is a bottom view.
[Fig. 10]

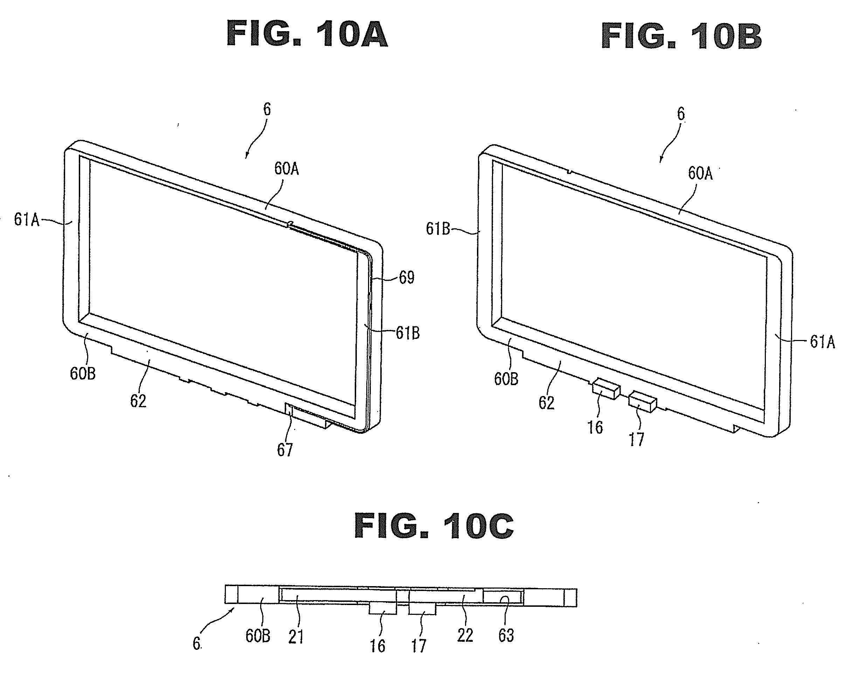

   Figs. 10A, 10B and 10C are explanatory drawings schematically showing a second spacer. Fig. 10A is a perspective view viewed from a front surface side. Fig. 10B is a perspective view viewed from a back surface side.
   Fig. 10C is a bottom view.
[Fig. 11]

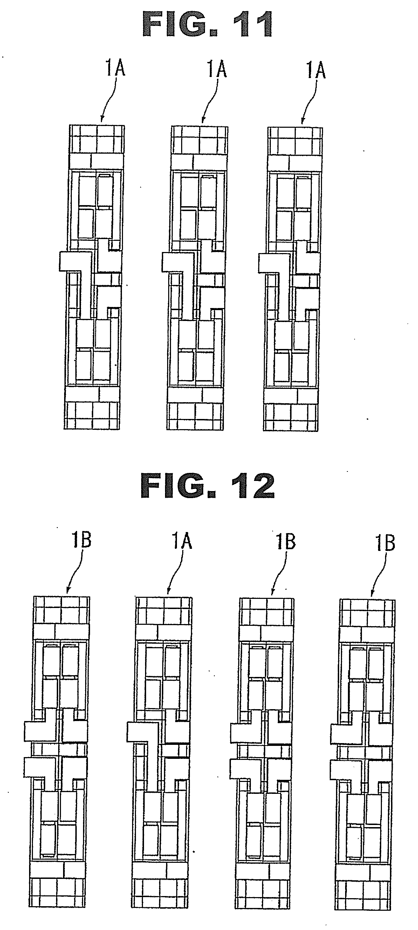

   Fig. 11 is an explanatory drawing showing an example of connection of the cell unit according to the present invention.
[Fig. 12]
   Fig. 12 is an explanatory drawing showing an example of connection of the cell unit according to the present invention.
[Fig. 13]

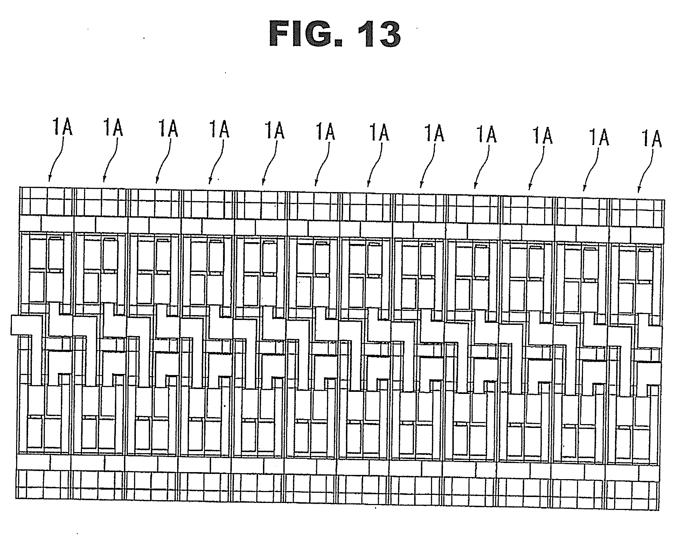

   Fig. 13 is an explanatory drawing showing an example of connection of twelve cell units according to the present invention.
[Fig. 14]

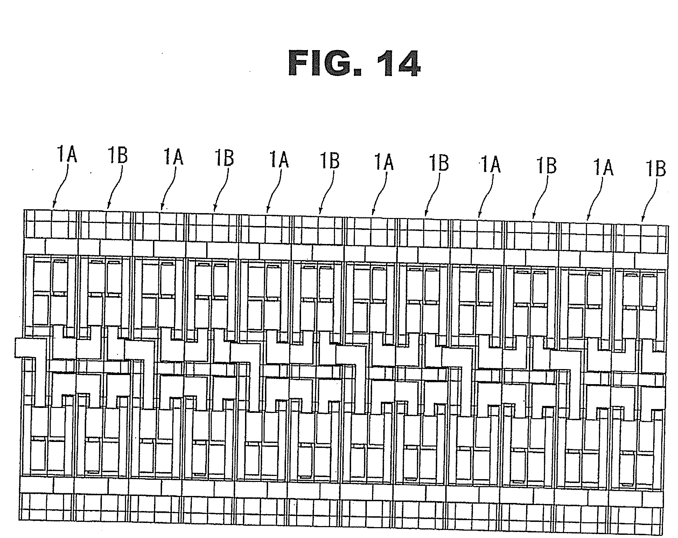

   Fig. 14 is an explanatory drawing showing an example of connection of twelve cell units according to the present invention.
[Fig. 15]

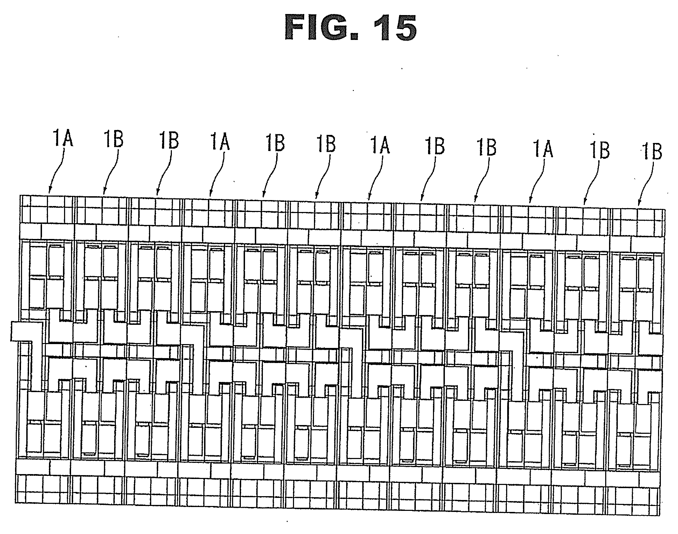

   Fig. 15 is an explanatory drawing showing an example of connection of twelve cell units according to the present invention.
[Fig. 16]

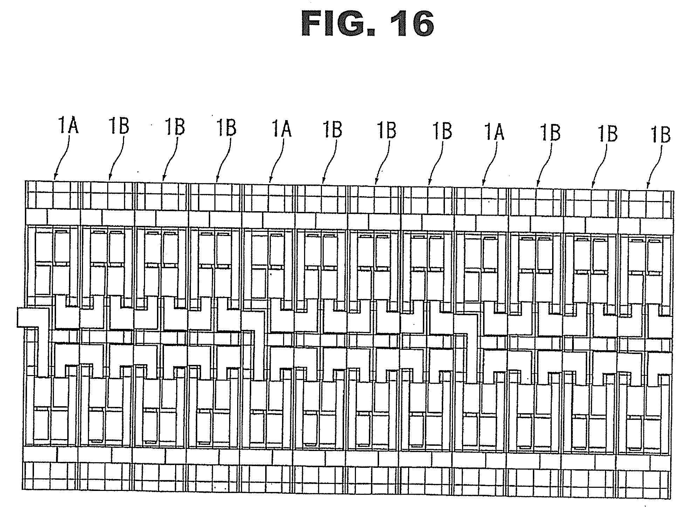

   Fig. 16 is an explanatory drawing showing an example of connection of twelve cell units according to the present invention.
[Fig. 17]

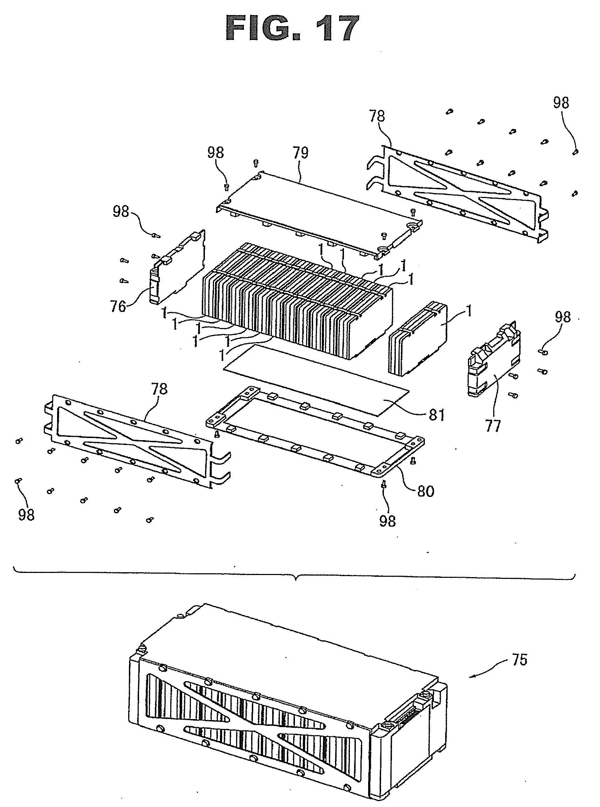

   Fig. 17 is a perspective exploded view schematically showing a cell module according to the present invention.
[Fig. 18]

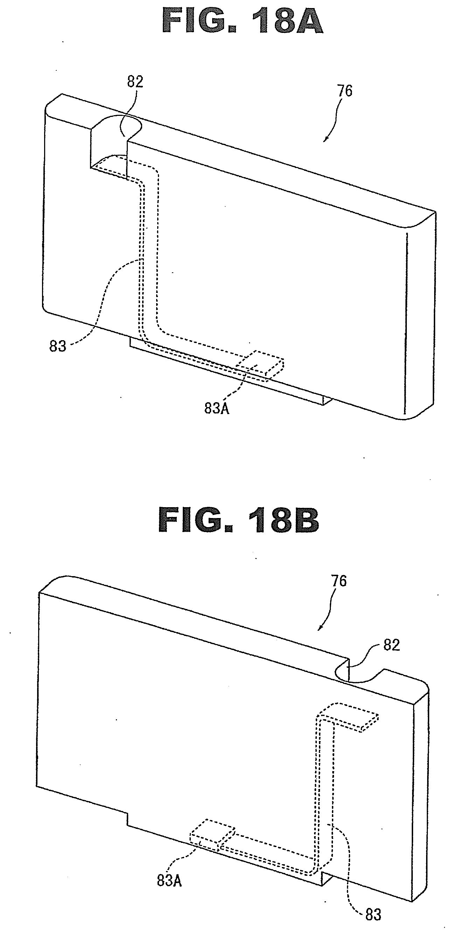

   Figs. 18A and 18B are explanatory drawings schematically showing a first end plate for module. Fig. 18A is a perspective view viewed from a front surface side. Fig. 18B is a perspective view viewed from a back surface side.
[Fig. 19]

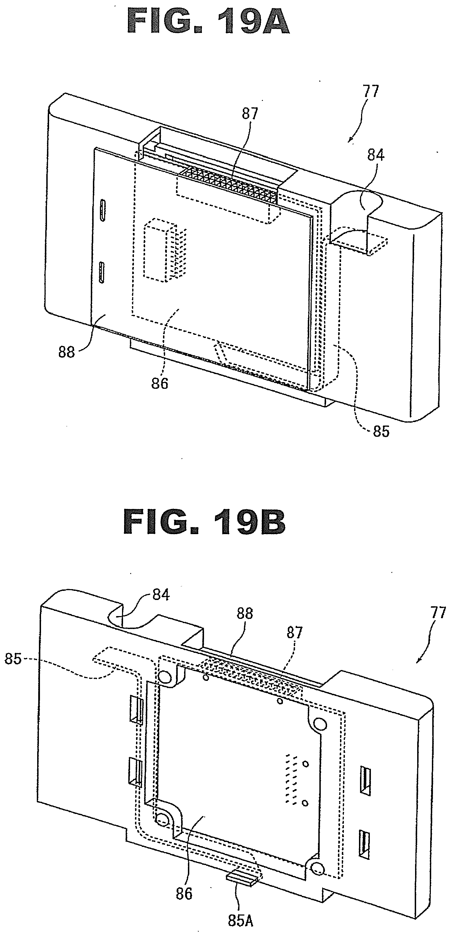

   Figs. 19A and 19B are explanatory drawings schematically showing a second end plate for module. Fig. 19A is a perspective view viewed from a front surface side. Fig. 19B is a perspective view viewed from a back surface side.
[Fig. 20]

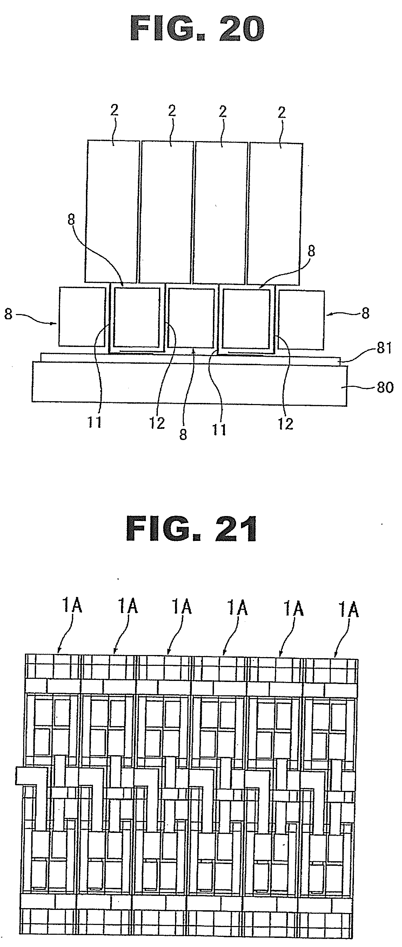

   Fig. 20 is an explanatory drawing schematically showing a cooling structure of the cell module according to the present invention.
[Fig. 21]
   Fig. 21 is an explanatory drawing showing an example of connection of six cell units according to the present invention.

### Embodiments for carrying out the Invention

In the following description, an embodiment of the present invention will be explained in detail with reference to the drawings. Fig. 1 is a perspective exploded view schematically showing a cell unit 1. The cell unit 1 corresponds to a battery unit. The cell unit 1 has a structure in which three cells 2 are stacked.

That is, the cell unit 1 has a structure in which, from a left side in the drawing, an end plate 7, a first spacer 4, the cell 2A, a second spacer 5, the cell 2B, a third spacer 6, the cell 2C, the first spacer 4 and the end plate 7 are stacked in this order. An overall shape of the cell unit 1 is a flat rectangular parallelepiped. In other words, the cell unit 1 has a structure in which the cells 2A, 2B and 2C are accommodated in a case 8 formed by the pair of first spacers 4 and 4, the second spacer 5, the third spacer 6 and the pair of end plate 7 and 7.

For convenience of explanation, in the following explanation, this stacking direction is an X-axis, a horizontal direction in the drawing is a Y-axis, and a vertical direction in the drawing is a Z-axis.

The cell 2 corresponds to a film-sheathedbattery, and is, for instance, a flat lithium-ion secondary battery (a flat lithium-ion rechargeable battery) sealed with a sheathing film. This cell 2 is formed such that a battery element obtained by alternately arranging a positive electrode plate(s) (not shown) and a negative electrode plate (s) (not shown) in layers through a separator (s) (not shown) is sandwiched between the sheathing films, and peripheries of these sheathing films are heat-bonded and hermetically sealed.

More specifically, as shown in Fig. 2, the cell 2 is formed by folding one almost flat rectangular-shaped laminate film 10, which is the sheathing film, in two and by sandwiching the above battery element in the folded laminate film 10 then by heat-bonding the remaining three sides (two rectangular shorter sides and a longer side) of the folded laminate film 10. The laminate film 10 is a multilayer film including at least a heat-bonding layer (or a heat-sealing layer) located inside, an intermediate metal layer and a protective layer located outside. Here, the seal of the laminate film 10 by the heat-bonding is carried out with a filler port for filling of the electrolyte unsealed. After filling an inside of the laminate film 10 with the electrolyte, the filler port is sealed.

The cell 2 of the present embodiment has a positive electrode tab 11 and a negative electrode tab 12 as lead terminals which are drawn out from the heat-bonded rectangular longer side of the laminate film 10 to the outside. Each top end side of the positive and negative electrode tabs 11 and 12 has a bifurcated or forked shape by being cut in, and top end portions 11A, 11B and 12A, 12B are formed at the top end sides of the positive and the negative electrode tabs 11 and 12.

Then the top end portions 11A, 11B and 12A, 12B of each of the cells 2A, 2B and 2C are electrically connected to each other through a busbar etc. provided at the first spacer 4, the second spacer 5 and the third spacer 6. This will be explained later in detail.

Here, the cell unit 1 of the present embodiment is broadly divided into two; a first cell unit 1A for series connection as shown in Fig. 3 and a second cell unit 1B for parallel connection as shown in Fig. 4. When a plurality of these first cell unit 1A and second cell unit 1B are arbitrarily stacked and combined together, these cell units can be electrically connected to each other.

As shown in Figs. 3 and 4, the top end portions 11A, 11B and 12A, 12B of the positive and negative electrode tabs 11 and 12 in the cell unit 1A and 1B are drawn out to an outer peripheral side of the case 8, and are exposed to the outside.

The first cell unit 1A has one negative electrode terminal (one side negative electrode terminal 15) at one side (a left side in Fig. 3) in the stacking direction when connecting the cell units 1 (i.e. in a right-and-left direction, namely the X-axis direction in Fig. 3) and has a positive electrode terminal (the other side positive electrode terminal 16) and a negative electrode terminal (the other side negative electrode terminal 17) at the other side (a right side in Fig. 3) in the stacking direction.

That is, the first cell unit 1A is configured so that apair of terminals (the one side negative electrode terminal 15 and the other side positive electrode terminal 16) are formed with these terminals being separate from each other in the stacking direction, and the remaining terminal (the other side negative electrode terminal 17) is formed in the same position as that of the other side positive electrode terminal 16 of the pair of terminals in the X-axis direction of the stacking direction and the Z-axis direction (an up-and-down direction in Fig. 3).

Regarding the first cell unit 1A, the negative electrode tabs 12 of the cells 2 in the first cell unit 1A are connected to the one side negative electrode terminal 15 and the other side negative electrode terminal 17 so that the negative electrode tabs 12 can be energized by the electrical connection. On the other hand, the positive electrode tabs 11 of the cells 2 in the first cell unit 1A are connected to the other side positive electrode terminal 16 so that the positive electrode tabs 11 can be energized by the electrical connection.

The one side negative electrode terminal 15 is a protruding terminal that protrudes from the first cell unit 1A laterally outwards along the stacking direction. Both end portions of the other side positive electrode terminal 16 and the other side negative electrode terminal 17 are non-protruding terminals that do not protrude from the first cell unit 1A laterally outwards and are positioned within the first cell unit 1A in the stacking direction. The other side positive electrode terminal 16 of the non-protruding terminal is located in a position that is a back side of the one side negative electrode terminal 15 of the protruding terminal (or an opposite side to the one side negative electrode terminal 15 of the protruding terminal), namely that the other side positive electrode terminal 16 is provided separately from the one side negative electrode terminal 15 in the X-axis direction and located in the same position as the one side negative electrode terminal 15 in the Y-axis and Z-axis directions. Here, the protruding terminal and the non-protruding terminal are formed by, for instance, a faston terminal. The protruding terminal serves as a male side terminal and the non-protruding terminal serves as a female side terminal, then both of these male and female side terminals can be fitted together.

The one side negative electrode terminal 15 is formed at a top end of an L-shaped busbar 20 that is fixed to an outer peripheral surface of the second spacer 5 (see Fig. 1 and after-mentioned Figs. 7 and 9). The other side positive electrode terminal 16 is formed at a top end of an L-shaped busbar 21 that is fixed to an outer peripheral surface of the third spacer 6 (see Fig. 1 and after-mentioned Figs. 7 and 10). The other side negative electrode terminal 17 is formed at a top end of an L-shaped busbar 22 that is fixed to the outer peripheral surface of the third spacer 6. Thebusbars20, 21 and 22 correspond to conductive members which are made of, for instance, metal material having conductivity.

Fig. 5 is an explanatory drawing schematically showing electrical connection states of the cells 2A, 2B and 2C in the first cell unit 1A with the spacers 4, 5 and 6 omitted.

The top end portions 11A, 11B and 12A, 12B of the positive and negative electrode tabs 11 and 12 of the cell 2A are bent in a direction at substantially right angles towardan inner side of the first cell unit 1A (toward the cell 2B side). In other words, in the first cell unit 1A, regarding the cell 2A of the three cells 2A, 2B and 2C stacked in the case 8, which is located at an outer side in the stacking direction in the case 8, the top end portions 11A, 11B and 12A, 12B of the cell 2A are bent toward the adjacent cell 2B located inside. When being bent, the top end portions 12A and 12B of the negative electrode tab 12 of the cell 2A are bent so as to cover or overlap with the busbar 20.

Then the top end portion 12B of the negative electrode tab 12 of the cell 2A is welded to the busbar 20 of the second spacer 5 at a welding portion 23A.

The top end portion 11A of the positive electrode tab 11 of the cell 2B is bent in a direction at substantially right angles toward the cell 2A side so as to overlap with the top end portion 11A of the positive electrode tab 11 of the cell 2A. The top end portion 11B of the positive electrode tab 11 of the cell 2B is bent in a direction at substantially right angles toward the cell 2C side. The top end portion 11B of the positive electrode tab 11 of the cell 2B is bent so as to cover or overlap with the busbar 21.

The top end portion 12A of the negative electrode tab 12 of the cell 2B is bent toward the cell 2A side so as to cover or overlap with the busbar 20 and also overlap with the top end portion 12A of the negative electrode tab 12 of the cell 2A. The top end portion 12B of the negative electrode tab 12 of the cell 2B is bent toward the cell 2C side.

That is, in the first cell unit 1A, regarding the cell 2B of the three cells 2A, 2B and 2C stacked in the case 8, which is located inside by being sandwiched between the cells 2A and 2C, the top end portions 11A and 12A of the cell 2B are bent toward the adjacent cell 2A, and the top end portions 11B and 12B of the cell 2B are bent toward the adjacent cell 2C.

Then the top end portion 11A of the positive electrode tab 11 of the cell 2B and the top end portion 11A of the positive electrode tab 11 of the cell 2A are welded to each other at a welding portion 23B. Further, the top end portion 12A of the negative electrode tab 12 of the cell 2B and the top end portion 12A of the negative electrode tab 12 of the cell 2A overlap with each other at the cell 2B side with respect to the busbar 20, and are welded to each other at a welding portion 23C.

The top end portions 11A, 11B and 12A, 12B of the positive and negative electrode tabs 11 and 12 of the cell 2C are bent in a direction at substantially right angles toward an inner side of the first cell unit 1A (toward the cell 2B side). In other words, in the first cell unit 1A, regarding the cell 2C of the three cells 2A, 2B and 2C stacked in the case 8, which is located at an outer side in the stacking direction in the case 8, the top end portions 11A, 11B and 12A, 12B of the cell 2C are bent toward the adjacent cell 2B located inside. When being bent, the top end portions 11A and 11B of the positive electrode tab 11 of the cell 2C are bent so as to cover or overlap with the busbar 21, and the top end portion 12A of the negative electrode tab 12 of the cell 2C is bent so as to cover or overlap with the busbar 22.

Then the top end portion 11A of the positive electrode tab 11 of the cell 2C is welded to the busbar 21 of the third spacer 6 at a welding portion 23D. The top end portion 12A of the negative electrode tab 12 of the cell 2C is welded to the busbar 22 of the third spacer 6 at a welding portion 23E. The top end portion 11B of the positive electrode tab 11 of the cell 2C and the top end portion 11B of the positive electrode tab 11 of the cell 2B overlap with each other at the cell 2B side with respect to the busbar 21, and are welded to each other at a welding portion 23F. The top end portion 12B of the negative electrode tab 12 of the cell 2C and the top end portion 12B of the negative electrode tab 12 of the cell 2B overlap with each other at the cell 2B side with respect to the busbar 22, and are welded to each other at a welding portion 23G.

Accordingly, in the first cell unit 1A, at least a part of the positive and negative electrode tabs 11 and 12 and the busbars 20, 21 and 22 of the cell 2 is exposed to the outside at one end surface of the case 8. Further, in the first cell unit 1A, the cells 2A, 2B and 2C are electrically connected in parallel.

As shown in Fig. 4, the second cell unit 1B has one positive electrode terminal and one negative electrode terminal at each of one side (a left side in Fig. 4) in the stacking direction when connecting the cell units 1 (i.e. in a right-and-left direction, namely the X-axis direction in Fig. 4) and the other side (a right side in Fig. 4) in the stacking direction. That is, the second cell unit 1B has one side positive electrode terminal 24 and one side negative electrode terminal 25 at the one side in the stacking direction and has the other side positive electrode terminal 26 and the other side negative electrode terminal 27 at the other side in the stacking direction.

The one side positive electrode terminal 24 and the other side positive electrode terminal 26 are provided separately from each other in the stacking direction (in the X-axis direction) and located in the same position in the Y-axis and Z-axis directions. The one side negative electrode terminal 25 and the other side negative electrode terminal 27 are provided separately from each other in the stacking direction (in the X-axis direction) and located in the same position in the Y-axis and Z-axis directions.

The second cell unit 1B is configured so that the one side positive electrode terminal 24 and the other side positive electrode terminal 26 are formed with these terminals being separate from each other in the stacking direction, and the one side negative electrode terminal 25 and the other side negative electrode terminal 27 are formed with these terminals being separate from each other in the stacking direction. Further, the one side positive electrode terminal 24 and the other side positive electrode terminal 26 are located in the same position in the Y-axis direction (an up-and-down direction) in Fig. 4 and also located in the same position in the Z-axis direction (a vertical direction of the drawing). The one side negative electrode terminal 25 and the other side negative electrode terminal 27 are located in the same position in the up-and-down direction in Fig. 4 and also located in the same position in the vertical direction of the drawing.

Regarding the second cell unit 1B, the positive electrode tabs 11 of the cells 2 in the second cell unit 1B are connected to the one side positive electrode terminal 24 and the other side positive electrode terminal 26 so that the positive electrode tabs 11 can be energized by the electrical connection. On the other hand, the negative electrode tabs 12 of the cells 2 in the second cell unit 1B are connected to the one side negative electrode terminal 25 and the other side negative electrode terminal 27 so that the negative electrode tabs 12 can be energized by the electrical connection.

The one side positive electrode terminal 24 and the one side negative electrode terminal 25 are protruding terminals that protrude from the second cell unit 1B laterally outwards along the stacking direction. The other side positive electrode terminal 26 and the other side negative electrode terminal 27 are non-protruding terminals that do not protrude from the second cell unit 1B laterally outwards and are positioned within the second cell unit 1B in the stacking direction. The other side positive electrode terminal 26 of the non-protruding terminal is located in a position that is a back side of the one side positive electrode terminal 24 of the protruding terminal (or an opposite side to the one side positive electrode terminal 24 of the protruding terminal), namely that the other side positive electrode terminal 26 is provided separately from the one side positive electrode terminal 24 in the X-axis direction and located in the same position as the one side positive electrode terminal 24 in the Y-axis and Z-axis directions. Likewise, the other side negative electrode terminal 27 of the non-protruding terminal is located in a position that is a back side of the one side negative electrode terminal 25 of the protruding terminal (or an opposite side to the one side negative electrode terminal 25 of the protruding terminal), namely that the other side negative electrode terminal 27 is provided separately from the one side negative electrode terminal 25 in the X-axis direction and located in the same position as the one side negative electrode terminal 25 in the Y-axis and Z-axis directions. Here, also in the second cell unit 1B, the protruding terminal and the non-protruding terminal are formed by, for instance, the faston terminal. The protruding terminal serves as the male side terminal and the non-protruding terminal serves as the female side terminal, then both of these male and female side terminals can be fitted together.

The one side positive electrode terminal 24 is formed at a top end of an L-shaped busbar 30 that is fixed to the outer peripheral surface of the second spacer 5 (see Fig. 4). The one side negative electrode terminal 25 is formed at a top end of an L-shaped busbar 31 that is fixed to the outer peripheral surface of the second spacer 5. The other side positive electrode terminal 26 is formed at a top end of an L-shaped busbar 32 that is fixed to the outer peripheral surface of the third spacer 6 (see Fig. 4). The other side negative electrode terminal 27 is formed at a top end of an L-shaped busbar 33 that is fixed to the outer peripheral surface of the third spacer 6. The busbars 30, 31, 32 and 33 correspond to conductive members which are made of, for instance, metal material having conductivity.

Fig. 6 is an explanatory drawing schematically showing electrical connection states of the cells 2A, 2B and 2C in the second cell unit 1B with the spacers 4, 5 and 6 omitted.

The top end portions 11A, 11B and 12A, 12B of the positive and negative electrode tabs 11 and 12 of the cell 2A are bent in a direction at substantially right angles toward an inner side of the second cell unit 1B (toward the cell 2B side). The top end portions 11A and 11B of the positive electrode tab 11 of the cell 2A are bent so as to cover or overlap with the busbar 30. In other words, in the second cell unit 1B, regarding the cell 2A of the three cells 2A, 2B and 2C stacked in the case 8, which is located at an outer side in the stacking direction in the case 8, the top end portions 11A, 11B and 12A, 12B of the cell 2A are bent toward the adjacent cell 2B located inside. When being bent, the top end portions 12A and 12B of the negative electrode tab 12 of the cell 2A are bent so as to cover or overlap with the busbar 31.

Then the top end portions 11A of the positive electrode tab 11 of the cell 2A is welded to the busbar 30 at a welding portion 34A. The top end portion 12B of the negative electrode tab 12 of the cell 2A is welded to the busbar 31 at a welding portion 34B.

The top end portion 11A of the positive electrode tab 11 of the cell 2B is bent in a direction at substantially right angles toward the cell 2A side so as to cover or overlap with the busbar 30 and also overlap with the top end portion 11A of the positive electrode tab 11 of the cell 2A. The top end portion 11B of the positive electrode tab 11 of the cell 2B is bent in a direction at substantially right angles toward the cell 2C side so as to cover or overlap with the busbar 32.

The top end portion 12A of the negative electrode tab 12 of the cell 2B is bent toward the cell 2A side so as to cover or overlap with the busbar 31 and also overlap with the top end portion 12A of the negative electrode tab 12 of the cell 2A. The top end portion 12B of the negative electrode tab 12 of the cell 2B is bent toward the cell 2C side.

That is, in the second cell unit 1B, regarding the cell 2B of the three cells 2A, 2B and 2C stacked in the case 8, which is located inside by being sandwiched between the cells 2A and 2C, the top end portions 11A and 12A of the cell 2B are bent toward the adjacent cell 2A, and the top end portions 11B and 12B of the cell 2B are bent toward the adjacent cell 2C.

Then the top end portion 11A of the positive electrode tab 11 of the cell 2B and the top end portion 11A of the positive electrode tab 11 of the cell 2A are welded to each other at a welding portion 34C. More specifically, in the present embodiment, the top end portion 11A of the positive electrode tab 11 of the cell 2B is located in an outer position with respect to the top end portion 11A of the positive electrode tab 11 of the cell 2A. Then an inner side surface of the top end portion 11A of the positive electrode tab 11 of the cell 2A is welded to the busbar 30, and an outer side surface of the top end portion 11A of the positive electrode tab 11 of the cell 2A is welded to the top end portion 11A of the positive electrode tab 11 of the cell 2B. Further, the top end portion 12A of the negative electrode tab 12 of the cell 2B and the top end portion 12A of the negative electrode tab 12 of the cell 2A overlap with each other at the cell 2B side with respect to the busbar 31, and are welded to each other at a welding portion 34D.

The top end portions 11A, 11B and 12A, 12B of the positive and negative electrode tabs 11 and 12 of the cell 2C are bent in a direction at substantially right angles toward an inner side of the second cell unit 1B (toward the cell 2B side). In other words, in the second cell unit 1B, regarding the cell 2C of the three cells 2A, 2B and 2C stacked in the case 8, which is located at an outer side in the stacking direction in the case 8, the top end portions 11A, 11B and 12A, 12B of the cell 2C are bent toward the adjacent cell 2B located inside. When being bent, the top end portions 11A and 11B of the positive electrode tab 11 of the cell 2C are bent so as to cover or overlap with the busbar 32, and the top end portion 12A of the negative electrode tab 12 of the cell 2C is bent so as to cover or overlap with the busbar 33.

Then the top end portion 11A of the positive electrode tab 11 of the cell 2C is welded to the busbar 32 at a welding portion 34E. The top end portion 12A of the negative electrode tab 12 of the cell 2C is welded to the busbar 33 of the third spacer 6 at a welding portion 34F. The top end portion 11B of the positive electrode tab 11 of the cell 2C and the top end portion 11B of the positive electrode tab 11 of the cell 2B overlap with each other at the cell 2B side with respect to the busbar 32, and are welded to each other at a welding portion 34G. The top end portion 12B of the negative electrode tab 12 of the cell 2C and the top end portion 12B of the negative electrode tab 12 of the cell 2B are welded to each other at a welding portion 34H.

Accordingly, also in the second cell unit 1B, at least a part of the positive and negative electrode tabs 11 and 12 and the busbars 30, 31, 32 and 33 of the cell 2 is exposed to the outside at one end surface of the case 8. Further, in the second cell unit 1B, the cells 2A, 2B and 2C are electrically connected in parallel.

Here, each structure of the first spacer 4, the second spacer 5, the third spacer 6 and the end plate 7 will be explained with the first cell unit 1A taken as an example.

The first spacer 4, the second spacer 5, the third spacer 6 and the end plate 7 are made of, for instance, insulating synthetic resin material.

As shown in Fig. 7, the first spacer 4, the second spacer 5 and the third spacer 6 are shaped into a rectangular frame. The end plate 7 is shaped into a rectangular plate.

The first spacer 4 has, as shown in Figs. 8A and 8B, a pair of upper and lower long side portions 40A, 40B, a pair of right and left short side portions 41A, 41B and a protruding portion 42 that protrudes from a lower end of the long side portion 40B toward an outer circumferential side. The long side portion 40A is provided at an upper end thereof with two stopper grooves 43 to which stopper pieces 71 (described later) of the end plate 7 are fitted. Further, the protruding portion 42 is provided with recessed portions 44, 44. That is, the recessed portions 44, 44 are formed at an outer periphery of the first spacer 4.

The second spacer 5 has, as shown in Figs. 9A, 9B and 9C, a pair of upper and lower long side portions 50A, 50B, a pair of right and left short side portions 51A, 51B and a protruding portion 52 that protrudes from a lower end of the long side portion 50B toward an outer circumferential side. The protruding portion 52 is provided on a lower surface thereof with a long thin recessed portion 53 along a longitudinal direction of the long side portion 50B. That is, the recessed portion 53 is formed at an outer periphery of the second spacer 5. This recessed portion 53 is shaped so as to accommodate therein the busbar 20.

The busbar 20 is fixed in the recessed portion 53, and a top end side of the busbar 20 acts as the one side negative electrode terminal 15 and protrudes from a front surface side of the second spacer 5. This top end side of the busbar 20 extends through the recessed portion 44 of the adjacent first spacer 4 and protrudes outwards from the end plate 7. That is, the one side negative electrode terminal 15 as the protruding terminal formed at the top end of the busbar 20 is disposed at the recessed portion 44 of the first spacer 4 and the recessed portion 53 of the second spacer 5.

In addition, a thermistor 56 for temperature detection is fixed on the front surface side of the second spacer 5 with the thermistor 56 ranging between the long side portion 50B and the protruding portion 52. A lead wire 57 of this thermistor 56 is drawn out up to the long side portion 50A of the second spacer 5 along an outer peripheral edge of the second spacer 5, and further extends to an after-mentioned battery controller 86 (this is not shown by the drawing).

Although a case of the first cell unit 1A has been explained above, regarding the second spacer 5 of the second cell unit 1B, as shown in Fig. 4, instead of the busbar 20 of the first cell unit 1A, the busbars 30 and 31 are fixed to the second spacer 5 of the second cell unit 1B. A top end side of the busbar 30 acts as the one side positive electrode terminal 24 as the protruding terminal and protrudes from the second cell unit 1B laterally outwards along the stacking direction. A top end side of the busbar 31 acts as the one side negative electrode terminal 25 as the protruding terminal and protrudes from the second cell unit 1B laterally outwards along the stacking direction. That is, the one side positive electrode terminal 24 as the protruding terminal formed at the top end of the busbar 30 is disposed at the recessed portion 44 of the first spacer 4 and the recessed portion 53 of the second spacer 5. And the one side negative electrode terminal 25 as the protruding terminal formed at the top end of the busbar 31 is disposed at the recessed portion 44 of the first spacer 4 and the recessed portion 53 of the second spacer 5. Here, the busbars 30 and 31 correspond to conductive members which are made of, for instance, metal material having conductivity.

Returning to the first cell unit 1A, the case of the first cell unit 1A will be explained further. The third spacer 6 has, as shown in Figs. 10A, 10B and 10C, a pair of upper and lower long side portions 60A, 60B, a pair of right and left short side portions 61A, 61B and a protruding portion 62 that protrudes from a lower end of the long side portion 60B toward an outer circumferential side. The protruding portion 62 is provided on a lower surface thereof with a long thin recessed portion 63 along a longitudinal direction of the long side portion 60B. That is, the recessed portion 63 is formed at an outer periphery of the third spacer 6. This recessed portion 63 is shaped so as to accommodate therein the busbars 21 and 22.

The busbar 21 is fixed in the recessed portion 63, and a top end side of the busbar 21 acts as the other side positive electrode terminal 16 and protrudes from a back surface side of the third spacer 6. However, this top end side of the busbar 21 is substantially accommodated in the recessed portion 44 of the adjacent first spacer 4, then does not protrude outwards from the end plate 7. That is, the other side positive electrode terminal 16 as the non-protruding terminal formed at the top end of the busbar 21 is disposed at the recessed portion 44 of the first spacer 4 and the recessed portion 63 of the third spacer 6.

The busbar 22 is fixed in the recessed portion 63, and a top end side of the busbar 22 acts as the other side negative electrode terminal 17 and protrudes from the back surface side of the third spacer 6. However, this top end side of the busbar 22 is substantially accommodated in the recessed portion 44 of the adjacent first spacer 4, then does not protrude outwards from the end plate 7. That is, the other side negative electrode terminal 17 as the non-protruding terminal formed at the top end of the busbar 22 is disposed at the recessed portion 44 of the first spacer 4 and the recessed portion 63 of the third spacer 6.

The busbar 22 has, at its base end side, a protruding piece 67 that protrudes in a direction opposite to the other side negative electrode terminal 17. This protruding piece 67 is bent along an outer surface of the protruding portion 62 of the third spacer 6, and is exposed to a front surface side of the third spacer 6. A lead wire 69 for voltage detection is connected to the protruding piece 67. The lead wire 69 is drawn out up to the long side portion 60A of the third spacer 6 along an outer peripheral edge of the third spacer 6, and further extends to the after-mentioned battery controller 86 (this is not shown by the drawing). That is, a voltage detection unit that is capable of detecting voltage of the first cell unit 1A from the outside of the case 8 is formed by this lead wire 69.

Here, the third spacer 6 of the second cell unit 1B will be explained. As shown in Fig. 4, instead of the busbars 21 and 22 of the first cell unit 1A, the busbars 32 and 33 are fixed to the third spacer 6 of the second cell unit 1B. A top end side of the busbar 32 acts as the other side positive electrode terminal 26 as the non-protruding terminal, and is positioned within the second cell unit 1B in the stacking direction then does not protrude from the second cell unit 1B laterally outwards. A top end side of the busbar 33 acts as the other side negative electrode terminal 27 as the non-protruding terminal, and is positioned within the second cell unit 1B in the stacking direction then does not protrude from the second cell unit 1B laterally outwards. That is, the other side positive electrode terminal 26 as the non-protruding terminal formed at the top end of the busbar 32 is disposed at the recessed portion 44 of the first spacer 4 and the recessed portion 63 of the third spacer 6. The other side negative electrode terminal 27 as the non-protruding terminal formed at the top end of the busbar 33 is disposed at the recessedportion 44 of the first spacer 4 and the recessed portion 63 of the third spacer 6. In addition, in the same manner as the busbar 22, the busbar 33 has, at its base end side, a protruding piece (not shown) that is exposed to the front surface side of the third spacer 6. Further, in the same manner as the busbar 22 of the first cell unit 1A, a lead wire (not shown) for voltage detection is connected to the protruding piece. Here, the busbars 32 and 33 correspond to conductive members which are made of, for instance, metal material having conductivity.

The end plate 7 has, as shown in Fig. 7, the four stopper pieces 71 that protrude from an outer peripheral edge of the end plate 7. Each stopper piece 71 is bent inwards to unite the first spacer 4, the second spacer 5, the third spacer 6 and the cells 2 and hold them when sandwiching these spacers and cells between the end plates 7.

The first cell unit 1A and the second cell unit 1B are formed as explained above. Since the first cell unit 1A and the second cell unit 1B use the first spacer 4, the second spacer 5, the third spacer 6 and the end plate 7 each having the same outside shape, the terminals between the adjacent cell units can be in contact with each other when stacking the cell units 1. Thus, upon coupling the cell units, the cell units can be easily coupled together without using an additional member such as another busbar.

Further, the terminal provided at the back side of the protruding terminal (or at the opposite side to the protruding terminal) in the stacking direction is the non-protruding terminal, and the terminal provided at the back side of the non-protruding terminal (or at the opposite side to the non-protruding terminal) in the stacking direction is the protruding terminal. Therefore, when stacking and coupling the cell units 1 together, a gap or a space (or a distance) between the adjacent cell units 1 can be small. A size of a cell module as a battery module formed by stacking the cell units 1 can be thus reduced.

Moreover, as shown in Figs. 11 and 12, various connecting structures can be realized using the first cell unit 1A and the second cell unit 1B. Fig. 11 is an example of series connection formed by only the first cell unit 1A. Fig. 12 is an example in which series connection and parallel connection are combined using the first cell unit 1A and the second cell unit 1B.

In a case where twelve cell units 1 are stacked, for instance, as shown in Figs. 13 to 16, connecting structures formed by combination of the first cell unit 1A and the second cell unit 1B can be realized.

Fig. 13 is an example in which only the first cell units 1A are connected together. Fig. 14 is an example in which one first cell unit 1A and one second cell unit 1B are alternately connected using six first cell units 1A and six second cell units 1B. Fig. 15 is an example in which one first cell unit 1A and two second cell units 1B are alternately connected using four first cell units 1A and eight second cell units 1B. Fig. 16 is an example in which one first cell unit 1A and three second cell units 1B are alternately connected using three first cell units 1A and nine second cell units 1B.

In this manner, the number of the cell unit 1 and the type of the cell unit 1 used for the connection can be set as appropriate. It is consequently possible to readily meet a variety of specifications required of the cell module formed by stacking the plurality of cell units 1.

Fig. 17 is a perspective exploded view schematically showing a cell module 75 formed by stacking twelve cell units 1.

The cell module 75 has first and second end plates 76 and 77 for module for sandwiching the twelve cell units 1 in the stacking direction, a pair of side plates 78, 78 for sandwiching the twelve cell units 1 from both sides of the cell module 75 and upper and lower plates 79 and 80 for sandwiching the twelve cell units 1 from up and down directions. Then by fixing these plates together with a plurality of screws 98 etc., the stacked twelve cell units 1 are fixed and united. Further, a thermal conductive sheet 81 as a heat radiation member is interposed between the lower plate 80 and the twelve cell units 1.

The first and second end plates 76 and 77 for module are shaped into a rectangular plate, and are made of, for instance, insulating synthetic resin material.

As shown in Figs. 18A and 18B, the first end plate 76 for module has a terminal part 82 to output power from the cell module 75. Further, a busbar 83 is embedded inside the first endplate 76 by insert molding etc.. This busbar 83 is made of metal material having conductivity. The busbar 83 is set so that its one end 83A can be connected to the protruding terminal of the cell unit 1 in the cell module 75 and its other end extends to the terminal part 82.

As shown in Figs. 19A and 19B, the second end plate 77 for module has a terminal part 84 to output power from the cell module 75. Further, a busbar 85 is embedded inside the second end plate 77 by insert molding etc.. This busbar 85 is made of metal material having conductivity. The busbar 85 is set so that its one end 85A can be connected to the non-protruding terminal of the cell unit 1 in the cell module 75 and its other end extends to the terminal part 84.

Further, a board on which electronic components are mounted is mounted in the second end plate 77. This board functions as the battery controller 86. The lead wire 57 of the thermistor 56 and the lead wire 69 for voltage detection, which extend from each cell unit 1, are connected to this battery controller 86 (these connections are not shown). Here, a reference sign 87 in Figs. 19A and 19B is a connector unit for external connection provided at the board that is the battery controller 86. A reference sign 88 in Figs. 19A and 19B is a cover member covering the board that is the battery controller 86.

The side plate 78 is shaped into a rectangular plate as shown in Fig. 17, and is made of, for instance, metal material such as iron. Further, except for an outer peripheral edge and diagonal line portions of the side plate 78, opening portions are formed.

The upper and lower plates 79 and 80 are shaped into a rectangular plate as shown in Fig. 17, and is made of, for instance, metal material such as aluminum.

The thermal conductive sheet 81 is made of, for instance, insulating synthetic resin material having high thermal conductivity. This thermal conductive sheet 81 continuously extends throughout the overall length of the stacked twelve cell units 1. And as shown in Fig. 20, the thermal conductive sheet 81 directly touches the positive and negative electrode tabs 11 and 12 of the cell 2.

Further, the thermal conductive sheet 81 also can directly touch the busbars in the cell unit 1 by being elastically deformed when assembled. That is, the thermal conductive sheet 81 is set so as to directly or indirectly touch the lead terminal (the positive and negative electrode tabs 11 and 12) of the cell 2.

In the cell unit 1 of the present embodiment, a component or parts such as the busbar is not present at a lower surface of the cell unit 1, and a connecting portion of the lead terminal (the positive and negative electrode tabs 11 and 12) between the adjacent cells 2, 2 can be flat. Therefore, a large contact area of the connecting portion of the lead terminal to the thermal conductive sheet 81 can be easily obtained.

As a consequence, in the cell module 75 using cell units 1, heat generated in the cell unit 1 can be efficiently transferred to the lower plate 80 through the thermal conductive sheet 81 without employing sophisticated structure. And by the fact that the lower plate 80 acts as a heat sink, the cell unit 1 can efficiently be cooled.

In the embodiment described above, although the cell unit 1 has the three cells 2, the number of the cells 2 in the cell unit 1 is not limited to three. In a case except the three cells 2 in the cell unit 1, the number of the spacers can be changed as necessary so that all of the cells 2 are sandwiched between the spacers.

Further, in the embodiment described above, although the cell module 75 has the twelve cell units 1, the number of the cell units 1 in the cell module 75 is not limited to twelve. For instance, as shown in Fig. 21, the cell module could have six cell units 1. Thus, regarding the upper and lower plates 79 and 80, the side plates 78, 78 and thermal conductive sheet 81 which form the cell module 75, their sizes could be changed as necessary depending on the number of the cell units 1.

## Claims

1. A battery unit that is capable of being stacked with and electrically connected to a plurality of battery units, comprising:
a plurality of terminals, and wherein
at least a pair of terminals among the plurality of terminals are formed with both of the pair of terminals being separate from each other in a stacking direction of the battery unit, and
a remaining terminal is formed in a same position as either one of the pair of terminals in the stacking direction.

2. The battery unit as claimed in claim 1, wherein:
one of the pair of terminals is a positive electrode terminal, and the other of the pair of terminals is a negative electrode terminal, and
the battery unit has more than one positive electrode terminal and more than one negative electrode terminal.

3. The battery unit as claimed in claim 1 or 2, wherein:
a terminal located at one side in the stacking direction of the battery unit is either one of a protruding terminal that protrudes from the battery unit laterally outwards along the stacking direction or a non-protruding terminal that is positioned within the battery unit in the stacking direction, and a terminal located at the other side in the stacking direction of the battery unit is the other of the protruding terminal and the non-protruding terminal, and
adjacent battery units are connected by fitting of the protruding terminal and the non-protruding terminal.

4. The battery unit as claimed claim 3, wherein:
the non-protruding terminal is located in a position that is a back side of the protruding terminal.

5. The battery unit as claimed in any one of the preceding claims 1 to 4, wherein:
one negative electrode terminal is provided at one side in the stacking direction of the battery unit, and one positive electrode terminal and one negative electrode terminal are provided at the other side in the stacking direction of the battery unit.

6. The battery unit as claimed claim 4, wherein:
one negative electrode terminal is provided at the one side in the stacking direction of the battery unit, and one positive electrode terminal and one negative electrode terminal are provided at the other side in the stacking direction of the battery unit, and the negative electrode terminal provided at the one side in the stacking direction of the battery unit is the protruding terminal, and the positive electrode terminal and the negative electrode terminal provided at the other side in the stacking direction of the battery unit are the non-protruding terminal.

7. The battery unit as claimed in claim 5 or 6, wherein:
the positive electrode terminal provided at the other side in the stacking direction of the battery unit is located in a position that is a back side of the negative electrode terminal provided at the one side in the stacking direction of the battery unit.

8. The battery unit as claimed in any one of the preceding claims 1 to 4, wherein:
one positive electrode terminal and one negative electrode terminal are provided at one side in the stacking direction of the battery unit, and
one positive electrode terminal and one negative electrode terminal are provided at the other side in the stacking direction of the battery unit.

9. The battery unit as claimed claim 4, wherein:
one positive electrode terminal and one negative electrode terminal are provided at the one side in the stacking direction of the battery unit,
one positive electrode terminal and one negative electrode terminal are provided at the other side in the stacking direction of the battery unit,
the positive and negative electrode terminals provided at the one side in the stacking direction of the battery unit are the protruding terminals, and
the positive and negative electrode terminals provided at the other side in the stacking direction of the battery unit are the non-protruding terminals.

10. The battery unit as claimed in claim 8 or 9, wherein:
the negative electrode terminal provided at the other side in the stacking direction of the battery unit is located in a position that is a back side of the negative electrode terminal provided at the one side in the stacking direction of the battery unit, and
the positive electrode terminal provided at the other side in the stacking direction of the battery unit is located in a position that is a back side of the positive electrode terminal provided at the one side in the stacking direction of the battery unit.

11. The battery unit as claimed in any one of the preceding claims 1 to 10, wherein:
the battery unit is formed by stacking and accommodating a plurality of film-sheathed batteries in a case,
lead terminals, which are positive electrodes, of adjacent film-sheathed batteries in the case are connected to each other, and
lead terminals, which are negative electrodes, of the adjacent film-sheathed batteries in the case are connected to each other.

12. The battery unit as claimed in any one of the preceding claims 1 to 10, wherein:
the battery unit is formed by stacking and accommodating a plurality of film-sheathed batteries in a case, and
the film-sheathed batteries in the case are connected in parallel.

13. The battery unit as claimed in claim 11 or 12, wherein:
the film-sheathed battery has adjacent two positive electrode lead terminals and adjacent two negative electrode lead terminals,
all of the electrode lead terminals of both outer side film-sheathed batteries among the film-sheathed batteries stacked in the case are bent toward an adjacent inner side film-sheathed battery, and the both outer side film-sheathed batteries are connected to the adjacent inner side film-sheathed battery,
one of the two positive electrode lead terminals and one of the two negative electrode lead terminals of the inner side film-sheathed battery sandwiched between the adjacent film-sheathed batteries are bent toward one of the adjacent film-sheathed batteries, and the inner side film-sheathed battery is connected to the one of the adjacent film-sheathed batteries, and
the other of the two positive electrode lead terminals and the other of the two negative electrode lead terminals of the inner side film-sheathed battery sandwiched between the adjacent film-sheathed batteries are bent toward the other of the adjacent film-sheathed batteries, and the inner side film-sheathed battery is connected to the other of the adjacent film-sheathed batteries.

14. The battery unit as claimed in any one of the preceding claims 11 to 13, wherein:
at least one of the positive electrode lead terminal and the negative electrode lead terminal of the both outer side film-sheathed batteries among the film-sheathed batteries stacked in the case is connected to one of the plurality of terminals of the battery unit.

15. The battery unit as claimed in any one of the preceding claims 11 to 14, wherein:
the terminal of the battery unit is formed so as to extend toward the lead terminal of the film-sheathed battery.

16. The battery unit as claimed in any one of the preceding claims 11 to 15, wherein:
the case has a plurality of spacers,
each of the spacers is disposed between the film-sheathed batteries, and
each of the film-sheathed batteries is sandwiched by the spacers in the stacking direction.

17. The battery unit as claimed claim 16, wherein:
each of the spacers is provided at an outer periphery thereof with a recessed portion, and
the terminal of the battery unit is disposed at the recessed portion.

18. The battery unit as claimed in any one of the preceding claims 11 to 17, further comprising:
a voltage detection unit that is capable of detecting voltage of the film-sheathed battery from outside of the case.

19. The battery unit as claimed in any one of the preceding claims 11 to 18, wherein:
the lead terminal of the film-sheathed battery or a conductive member to which the lead terminal is connected is formed so as to be exposed to outside at one end surface of the case.

20. A battery module formed by arbitrarily stacking and combining a plurality of battery units of any one of the preceding claims 11 to 19.

21. The battery module as claimed claim 20, wherein:
the battery module is provided with a heat radiation member that continuously extends throughout the plurality of battery units in the stacking direction of the battery unit and directly or indirectly touches the lead terminal of the film-sheathed battery.
